# EUROPEAN PATENT SPECIFICATION

(11) **EP 2 958 018 B1**
(45) Date of publication and mention of the grant of the patent: **15.12.2021**
(21) Application number: 15163953.1
(22) Date of filing: 17.04.2015
(51) Int. Cl.: G06F 8/61, G06F 16/2457

(54) **METHOD AND DEVICE FOR PROMPTING APPLICATION REMOVAL**
VERFAHREN UND VORRICHTUNG ZUR AUFFORDERUNG DER ENTFERNUNG EINER ANWENDUNG
PROCÉDÉ ET DISPOSITIF PERMETTANT DE SIGNALER LA SUPPRESSION D'UNE APPLICATION

(30) Priority: 12.06.2014 CN 201410262155
(43) Date of publication of application: 23.12.2015
(73) Proprietor: Xiaomi Inc., Beijing 100085 (CN)
(72) Inventor: Wang, Bin, 100085 Beijing (CN); Ji, Dongfang, 100085 Beijing (CN); Zheng, Zhiguang, 100085 Beijing (CN)
(74) Representative: Cabinet Beau de Loménie

(56) References cited:
- JP-A- 2004 287 764
- JP-A- 2009 140 297
- US-A1- 2006 048 139
- US-A1- 2007 294 687

## Description

### TECHNICAL FIELD

The present invention relates to the technical field of mobile communication, and more particularly, to a method and a device for prompting application removal.

### BACKGROUND

Applications may be installed on or removed from a smart terminal at any time according to user needs. People will remove the infrequently or unfavorably used applications from the smart terminal. However, sometimes it is possible to remove the applications that are not intended to be removed due to some accidental operations.

When removing an application, local data of the application on the smart terminal will be removed together. Therefore, the local data of the application will be lost when removing the application not intended to be removed by mistake. Even if the application is reinstalled, the lost data cannot be restored yet.

When the user removes an application, a prompting window will be popped up for the user to confirm whether to remove the application. However, this prompting is too simple. When the user selects the application to be removed mistakenly, the user cannot find that the application to be removed is mistakenly selected through the prompting, thus causing loss of the local data.

Document US 2007/294687 A1 (MASSELLE ERIC L [US] ET AL) 20 December 2007 discloses a method for removing a file and also for un-installing an application. Document JP 2009 140297 A (SKY KK) 25 June 2009 discloses a method in which a received control instruction is judged to be a deleting instruction whereby a warning message may be displayed which reports that the application to be deleted is frequently used.

### SUMMARY

In order to overcome the problems in the related art, the present invention provides a method and a device for prompting application removal, which provide a more targeted prompting on user's behavior of application removal, thus reducing accidental removal operations of the user.

The present invention also provides a computer program, which when executing on a processor of a terminal, performs the above method.

This program can use any programming language and take the form of source code, object code or a code intermediate between source code and object code, such as a partially compiled form, or any other desirable form.

The technical solutions provided by the embodiments of the present invention may include the following advantageous effects: it is achieved that the terminal equipment outputs different removal prompting information for applications to be removed having different use situations, accidental removal operations of user is reduced, and application data is prevented from being lost; and by judging the significance of the application according to the use situation parameter and the data volume stored locally, and displaying or playing the significance via sounds in the removal prompting, the accidental removal operations of the user is reduced.

It is to be understood that both the foregoing general description and the following detailed description are exemplary and explanatory only and are not restrictive of the invention.

The present invention is defined according to the independent claims. Specific embodiments are defined in the dependent claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for prompting application removal, according to an exemplary embodiment.
Fig. 2 is a flow chart showing a method for prompting application removal, according to an exemplary embodiment.
Fig. 3 is a block diagram showing an interface when outputting removal prompting information, according to an exemplary embodiment.
Fig. 4 is a block diagram showing an interface when outputting removal prompting information, according to an exemplary embodiment.
Fig. 5 is a flow chart showing a method for prompting application removal, according to an exemplary embodiment.
Fig. 6 is a block diagram showing an interface when outputting removal prompting information, according to an exemplary embodiment.
Fig. 7 is a flow chart showing a method for prompting application removal, according to an exemplary embodiment.
Fig. 8 is a block diagram showing an interface when outputting removal prompting information, according to an exemplary embodiment.
Fig. 9 is a flow chart showing a method for prompting application removal, according to an exemplary embodiment.
Fig. 10 is a block diagram showing an interface when outputting removal prompting information, according to an exemplary embodiment.
Fig. 11 is a flow chart showing a method for prompting application removal, according to an exemplary embodiment.
Fig. 12 is a block diagram showing a device for prompting application removal, according to an exemplary embodiment.
Fig. 13 is a block diagram showing an output module, according to an exemplary embodiment.
Fig. 14 is a block diagram showing an output module, according to an exemplary embodiment.
Fig. 15 is a block diagram showing an output module, according to an exemplary embodiment.
Fig. 16 is a block diagram showing an output module, according to an exemplary embodiment.
Fig. 17 is a block diagram showing a device for prompting application removal, according to an exemplary embodiment.
Fig. 18 is a block diagram showing a device for prompting application removal, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

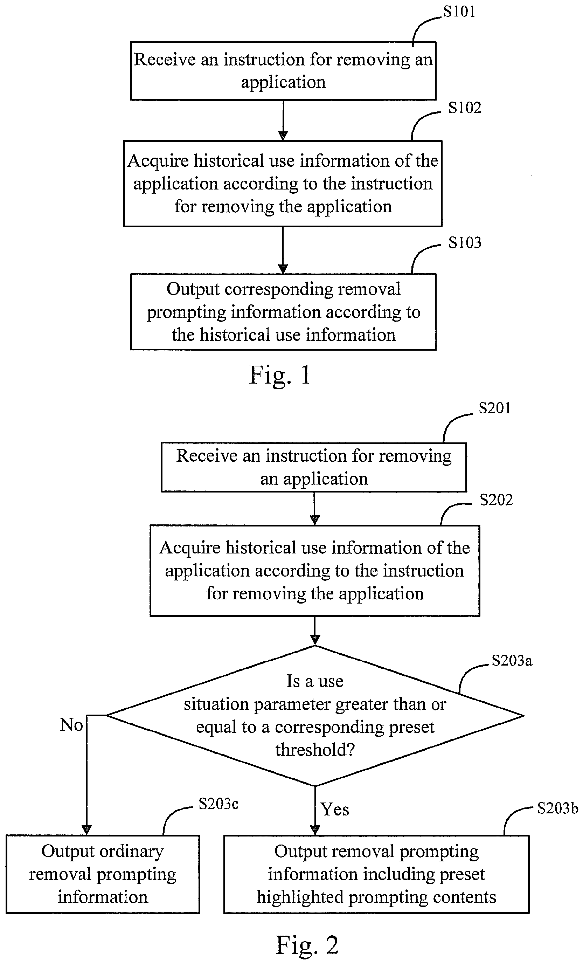

Fig. 1 is a flow chart showing a method for prompting application removal, according to an exemplary embodiment. As shown in Fig. 1, the method for prompting application removal is used in a terminal equipment, and includes the following steps.

In step 101, an instruction for removing an application is received.

The instruction for removing the application is from a removal operation to an application in the terminal equipment by a user.

In step 102, historical use information of the application is acquired according to the instruction for removing the application.

The terminal equipment acquires the historical use information of the application to be removed according to the instruction for removing the application. The historical use information is user's use behavior record with respect to the application, which can reflect whether the user uses the application frequently, and can also embody significance of the application to be removed for the user. Through acquiring the historical use information of the application, the terminal equipment can determine whether the user is removing the application which is frequently used or has a high significance.

In step 103, corresponding removal prompting information is outputted according to the historical use information.

The terminal equipment judges whether the user frequently uses the application to be removed, or judges the significance of the application to be removed for the user according to the acquired historical use information of the application to be removed. Different removal prompting information is outputted according to the historical use information of the application to be removed.

For example, when the user removes an application which is used infrequently, the terminal equipment outputs ordinary removal prompting information, e.g. "sure to remove the application?". When the user removes an application which is used frequently, the terminal equipment outputs a special prompt for prompting the user that an important application is being removed so as to prompt the user that the application which has a high significance or is frequently used is being removed. Therefore, it is implemented that different removal prompting information is outputted for applications to be removed having different use situations, accidental removal operations of the user is reduced, and loss of application data is prevented.

In the embodiments of the present invention, the historical use information includes: a use situation parameter of the application, and/or a data volume stored locally by the application, wherein the use situation parameter includes any one or more of a use frequency, a number of use, and duration of use. The terminal equipment judges the significance of the application to be removed for the user from a plurality of dimensions by using the foregoing historical use information. The method for prompting application removal of the present invention is further described in detail hereinafter through several typical embodiments.

### First Embodiment

As shown in Fig. 2, when the historical use information includes a use situation parameter of the application, the method for prompting application removal includes the following steps.

In step 201, an instruction for removing an application is received.

In step 202, historical use information of the application is acquired according to the instruction for removing the application.

The historical use information includes a use situation parameter of the application, and the use situation parameter includes one or more of a use frequency, a number of use, and duration of use.

In step 203, corresponding removal prompting information is outputted according to the historical use information. The step 203 further includes the following steps.

In step 203a, whether the use situation parameter is greater than or equal to a corresponding preset threshold is judged. If the use situation parameter is greater than or equal to the corresponding preset threshold, step 203b is performed. If the use situation parameter is smaller than to the corresponding preset threshold, step 203c is performed.

For each parameter in the use situation parameters such as the use frequency, the number of use, the duration of use, corresponding thresholds are preset respectively, for judging the significance of the application or whether the user uses the application frequently.

For example, a threshold of "once/day" is preset for the use frequency in the use situation parameters, and whether the use frequency of the application is greater than or equal to the threshold of "once/day" is judged; a threshold of "50 times" is preset for the number of use, and whether the number of use of the application exceeds the threshold of "50 times" is judged; and a threshold of "30 hours" is preset for the duration of use, and whether the duration of use accumulated by the application exceeds the threshold of "30 hours" is judged.

In step 203b, when the use situation parameter is greater than or equal to the corresponding preset threshold, removal prompting information including preset highlighted prompting contents is outputted.

In step 203c, when the use situation parameter is smaller than the corresponding preset threshold, ordinary removal prompting information is outputted.

When the use situation parameter is greater than or equal to the corresponding preset threshold, it is determined that the significance of the application for the user is high or the application is frequently used by the user, then the terminal equipment outputs the removal prompting information including preset highlighted prompting contents; and when the use situation parameter is smaller than the corresponding preset threshold, it is determined that the significance of the application for the user is low or the application is infrequently used by the user, then the terminal equipment outputs the ordinary removal prompting information.

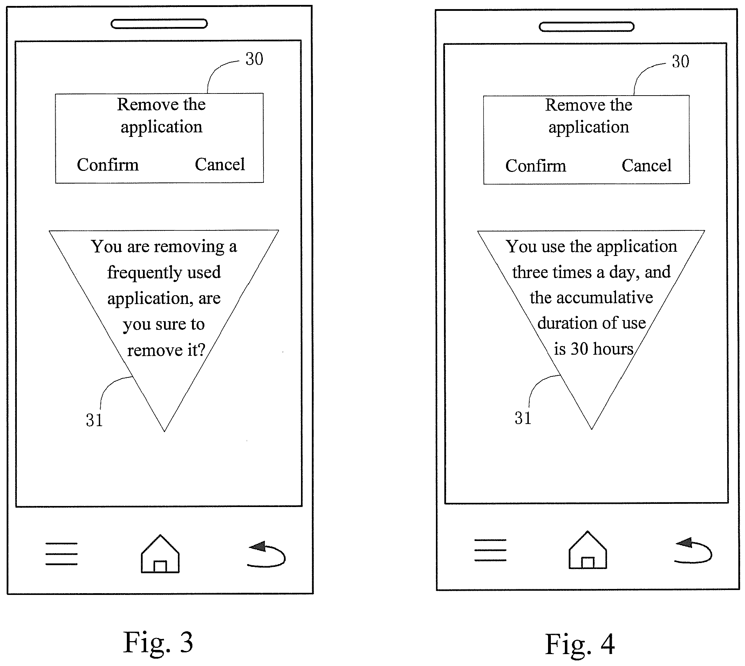

As shown in Fig. 3, besides prompting information 30 for confirming whether to continue this removal operation by the user, the removal prompting information further includes preset highlighted prompting contents 31. The preset highlighted prompting contents 31 are configured to prompt the user that the application which has a high significance or is frequently used is being removed. For example, the preset highlighted prompting contents 31 in the removal prompting information as shown in Fig. 3 are "you are removing a frequently used application, are you sure to remove it?". However, the ordinary removal prompting information only includes the prompting information 30 for confirming whether to continue this removal operation by the user, but does not include the preset highlighted prompting contents 31.

When judging that the application to be removed has a high significance or is frequently used through the use situation parameters, the terminal equipment outputs the removal prompting information including preset prompting contents to prompt the user that this removal operation will remove an application which has a high significance or is frequently used, thereby reducing the probability of accidental removal operations of the user, and preventing user data from losing due to accidental removal of the application.

In an embodiment of the present invention, as shown in Fig. 4, the preset prompting contents 31 in the removal prompting information further include the acquired use situation parameter. The preset prompting contents 31 as shown in Fig. 4 include such use situation parameters as a use frequency and duration of use of the application, for further prompting the significance of the application to be removed to the user.

In addition to the foregoing manner of displaying words, the fact that an application which has a high significance will be removed can be also prompted to the user through a manner of voice prompting. The contents of voice prompting are associated with the preset prompting contents, directly prompt the user that the application which has a high significance or is frequently used is being removed, or play the use situation parameters of the application to be removed through voices, thereby further reducing the probability of accidental removal operations of the user.

### Second Embodiment

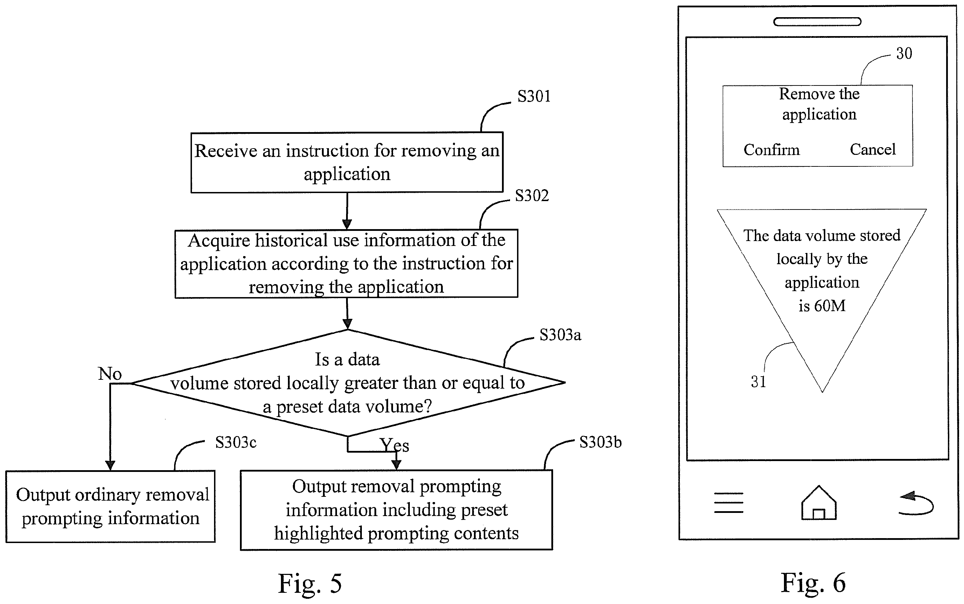

As shown in Fig. 5, when the historical use information includes the data volume stored locally by the application, the method for prompting application removal includes the following steps.

In step 301, an instruction for removing an application is received.

In step 302, historical use information of the application is acquired according to the instruction for removing the application.

The historical use information includes the data volume stored locally by the application to be removed. Through the data volume stored locally, the terminal equipment judges whether the application has a high significance or is frequently used.

In step 303, corresponding removal prompting information is outputted according to the historical use information. The step 303 further includes the following steps.

In step 303a, whether the data volume stored locally by the application is greater than or equal to a preset data volume is judged. If the data volume stored locally by the application is greater than or equal to the preset data volume, step 303b is performed. If the data volume stored locally by the application is smaller than the preset data volume, step 303c is performed.

If the application is frequently used, the user data stored locally will be bigger. The terminal equipment judges whether the application to be removed has a high significance or is frequently used according to the size of the data volume stored locally by the application to be removed. For example, the terminal equipment judges whether the data volume stored locally by the application to be removed is greater than or equal to a preset data volume 50M.

In step 303b, when the data volume stored locally by the application is greater than or equal to the preset data volume, removal prompting information including preset highlighted prompting contents is outputted.

In step 303c, when the data volume stored locally by the application is smaller than the preset data volume, ordinary removal prompting information is outputted.

As shown in Fig. 3, the removal prompting information including preset highlighted prompting contents includes prompting information 30 for confirming whether to continue this removal operation by the user and preset highlighted prompting contents 31. The ordinary removal prompting information only includes the prompting information 30 for confirming whether to continue this removal operation by the user, but does not include the preset highlighted prompting contents 31.

When the data volume stored locally by the application to be removed is greater than or equal to the preset data volume, it is determined that the application to be removed has a high significance or is frequently used by the user, and removal prompting information including the preset prompting contents 31 as shown in Fig. 3 is outputted; and when the data volume stored locally by the application to be removed is smaller than the preset data volume, it is determined that the significance of the application to be removed for the user is low or the application is infrequently used by the user, and ordinary removal prompting information is outputted.

When the terminal equipment judges that the application to be removed has a high significance or is frequently used by the user according to the data volume stored locally by the application to be removed, the removal prompting information including the preset prompting contents 31 as shown in Fig. 3 is outputted to prompt the user that a frequently used application is being removed, so as to prompt the user to re-verify whether the application to be removed is correct, thereby reducing probability of accidental removal operations.

In an embodiment of the preset invention, as shown in Fig. 6, the preset prompting contents 31 in the removal prompting information further include the data volume stored locally by the application. The preset prompting contents 31 as shown in Fig. 6 prompts the user that the data volume stored locally by the application is 60M, for further prompting the user that the application to be removed has a high significance and making the user to further verify whether to remove the application.

The application which has a high significance is being removed can be prompted to the user not only through the foregoing manner of displaying word, but also through a manner of voice prompting. The contents of the voice prompting are associated with the preset prompting contents, directly prompt the user that the application which has a high significance or is frequently used is being removed, or play the data volume stored locally by the application to be removed through voices, thereby further reducing the probability of accidental removal operations of the user.

### Third Embodiment

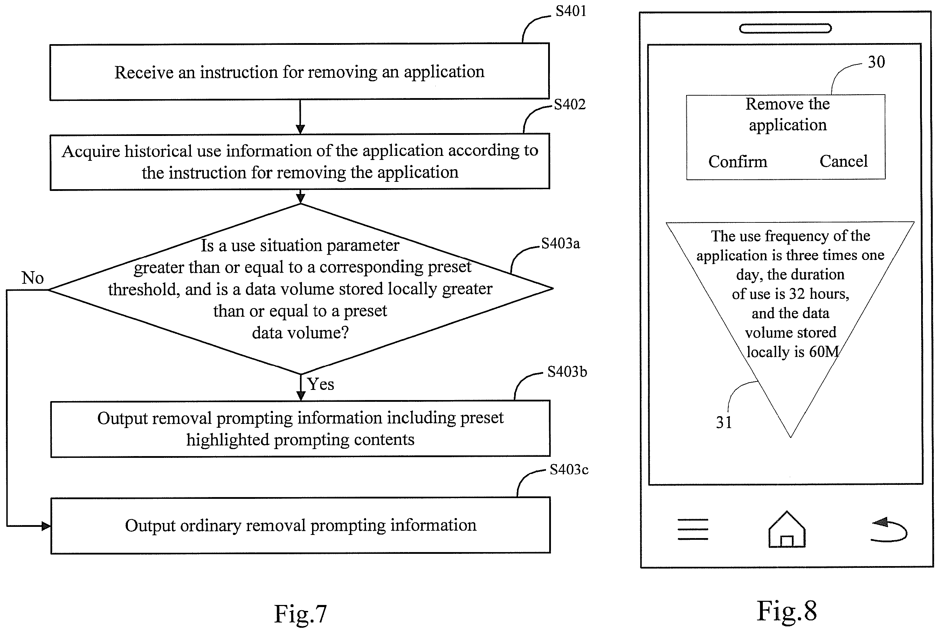

As shown in Fig. 7, when the historical use information includes the use situation parameter of the application and the data volume stored locally by the application, the method for prompting application removal includes the following steps.

In step 401, an instruction for removing an application is received.

In step 402, historical use information of the application is acquired according to the instruction for removing the application.

The historical use information includes the use situation parameter of the application and the data volume stored locally by the application. The use situation parameter includes any one or more of a use frequency, a number of use, and duration of use.

In step 403, corresponding removal prompting information is outputted according to the historical use information. The step 403 further includes the following steps.

In step 403a, whether the use situation parameter is greater than or equal to a corresponding preset threshold, and whether the data volume stored locally by the application is greater than or equal to a preset data volume are judged. If the use situation parameter is greater than or equal to the corresponding preset threshold, and the data volume stored locally by the application is greater than or equal to the preset data volume, step 403b is performed; and if the use situation parameter is smaller than the corresponding preset threshold, or the data volume stored locally by the application is smaller than the preset data volume, step 403c is performed.

The terminal equipment judges whether the application to be removed is frequently used by the user or has a high significance through the use situation parameter and the data volume stored locally simultaneously.

In step 403b, when the use situation parameter is greater than or equal to the corresponding preset threshold, and the data volume stored locally by the application is greater than or equal to the preset data volume, removal prompting information including preset highlighted prompting contents is outputted.

In step 403c, when the use situation parameter is smaller than the corresponding preset threshold, or the data volume stored locally by the application is smaller than the preset data volume, ordinary removal prompting information is outputted.

When the use situation parameter of the application to be removed is greater than or equal to the corresponding preset threshold and the data volume stored locally by the application is greater than or equal to the preset data volume, it is determined that the application to be removed has a high significance or is frequently used. At this time, removal prompting information including the preset prompting contents 31 as shown in Fig. 3 is outputted to prompt the user that a frequently used application is being removed, so as to prompt the user to re-verify whether the application to be removed is correct, thereby reducing the probability of accidental removal operations.

In an embodiment of the preset invention, as shown in Fig. 8, the preset prompting contents 31 in the removal prompting information further include the use situation parameter of the application and the data volume stored locally by the application. The preset prompting contents 31 as shown in Fig. 8 prompts the user that the use frequency of the application is "three times/day", the duration of use is "32 hours" and the data volume stored locally is 60M, for further prompting the user that the application to be removed has a high significance and making the user to further verify whether to remove the application.

The application which has a high significance is being removed can be prompted to the user not only through the foregoing manner of displaying word, but also through a manner of voice prompting. The contents of the voice prompting are associated with the preset prompting contents, directly prompt the user that the application which has a high significance or is frequently used is being removed, or playing the use situation parameters and the data volume stored locally by the application to be removed through voices, thereby further reducing the probability of accidental removal operations of the user.

### Fourth Embodiment

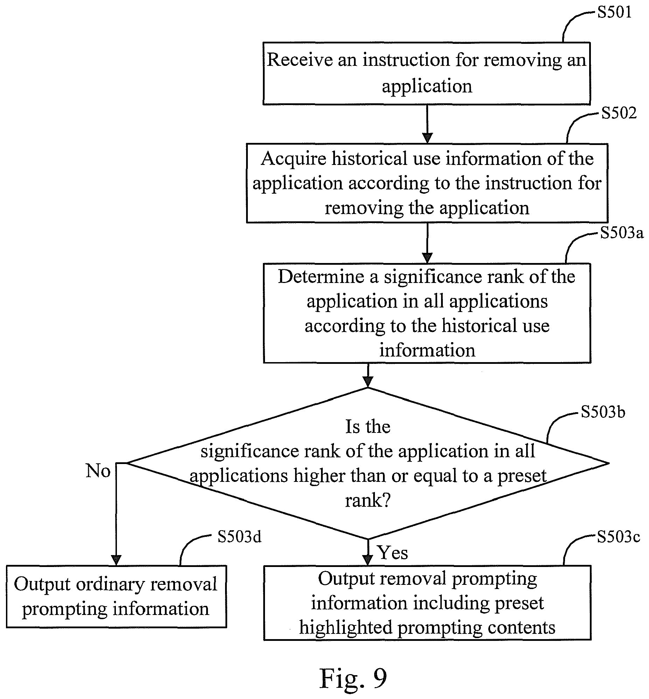

As shown in Fig. 9, when the historical use information includes the use situation parameter of the application and the data volume stored locally by the application, the method for prompting application removal includes the following steps.

In step 501, an instruction for removing an application is received.

In step 502, historical use information of the application is acquired according to the instruction for removing the application.

In step 503, corresponding removal prompting information is outputted according to the historical use information. The step 503 further includes the following steps.

In step 503a, a significance rank of the application in all applications is determined according to the historical use information.

The terminal equipment determines the significance rank of the application to be removed in all applications according to the historical use information of the application to be removed. The significance rank is obtained according to each use situation parameter in the historical use information and the data volume stored locally. In the use situation parameters, the application having a higher use frequency, a longer duration of use and a more number of use has a higher rank. The application having more data volume stored locally has a higher rank. The significance rank of each application in all applications is obtained through a weighted calculation to the rank of each use situation parameter and the rank of the data volume stored locally.

In step 503b, whether the significance rank of the application in all applications is higher than or equal to a preset rank is judged. If the significance rank of the application in all applications is higher than or equal to the preset rank, step 503c is performed. If the significance rank of the application in all applications is lower than the preset rank, step 503d is performed.

In step 503c, when the significance rank of the application in all applications is higher than or equal to the preset rank, removal prompting information including preset highlighted prompting contents is outputted.

In step 503d, when the significance rank of the application in all applications is lower than the preset rank, ordinary removal prompting information is outputted.

When the significance rank of the application to be removed in all applications is higher than or equal to the preset rank, it is determined that the application to be removed is frequently used by the user or has a high significance. At this time, removal prompting information including the preset prompting contents 31 as shown in Fig. 3 is outputted to prompt the user that a frequently used application is being removed, so as to prompt the user to re-verify whether the application to be removed is correct, thereby reducing the probability of accidental removal operations.

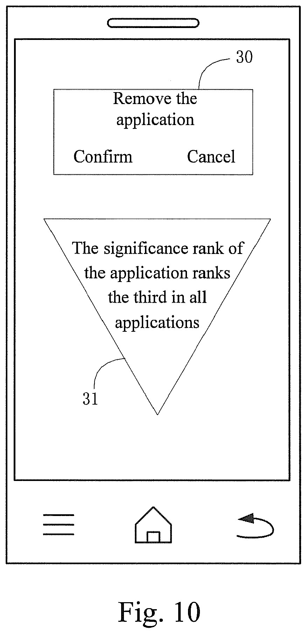

In an embodiment of the preset invention, as shown in Fig. 10, the preset prompting contents 31 in the removal prompting information further include the significance rank of the application in all applications. The preset prompting contents 31 as shown in Fig. 10 prompts the user that the significance rank of the application "ranks the third in all applications", for further prompting the user that the application to be removed has a high significance and making the user to further verify whether to remove the application.

The application which has a high significance is being removed can be prompted to the user not only through the foregoing manner of displaying word, but also through a manner of voice prompting. The contents of the voice prompting are associated with the preset prompting contents, directly prompt the user that the application which has a high significance or is frequently used is being removed, or playing the significance rank of the application to be removed in all applications through voices, thereby further reducing the probability of accidental removal operations of the user.

In the foregoing first to fourth embodiments, in order to further enhance the prompting effect to the user, when outputting the removal prompting information including preset highlighted prompting contents, the terminal equipment outputs the removal prompting information including preset highlighted prompting contents twice or more times continuously so as to remind the user multiple times. The reminding times can be changed according to the significance of the application to be removed. The higher the significance of the application, the more the output times of outputting the removal prompting information are.

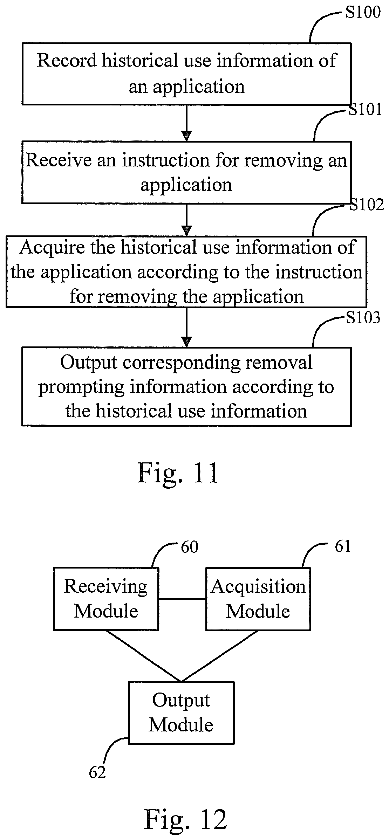

In an embodiment of the present invention, in order to accurately acquire the historical use information of the application, in the method for prompting application removal as shown in Fig. 1, before step 101, the method for prompting application removal further includes the following step as shown in Fig. 11.

In step 100, the historical use information of the application is recorded.

The terminal equipment records historical use information of all applications installed in a system, and the recorded historical use information includes the use situation parameter and the data volume stored locally, wherein the use situation parameter includes any one or more of a use frequency, a number of use, and duration of use.

Fig. 12 is a block diagram showing a device for prompting application removal, according to an exemplary embodiment. Referring to Fig. 12, the device includes a receiving module 60, an acquisition module 61 and an output module 62.

The receiving module 60 is configured to receive an instruction for removing an application.

The acquisition module 61 is configured to acquire historical use information of the application according to the instruction for removing the application received by the receiving module 60.

The output module 62 is configured to output corresponding removal prompting information according to the historical use information acquired by the acquisition module 62.

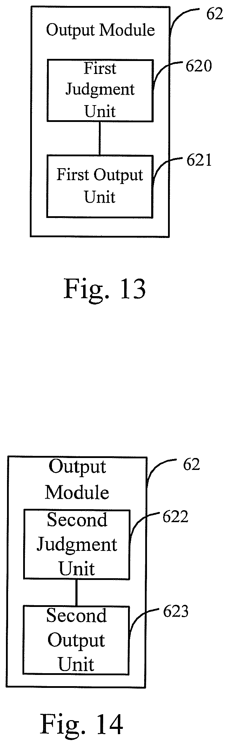

In an embodiment of the present invention, as shown in Fig. 13, the output module 62 includes a first judgment unit 620 and a first output unit 621.

The first judgment unit 620 is configured to judge whether the use situation parameter is greater than or equal to a corresponding preset threshold.

The first output unit 621 is configured to output removal prompting information including preset highlighted prompting contents when the first judgment unit 620 judges that the use situation parameter is greater than or equal to the corresponding preset threshold.

In an embodiment of the present invention, as shown in Fig. 14, the output module 62 includes a second judgment unit 622 and a second output unit 623.

The second judgment unit 622 is configured to judge whether a data volume stored locally by the application is greater than or equal to a preset data volume.

The second output unit 623 is configured to output removal prompting information including preset highlighted prompting contents when the second judgment unit 622 judges that the data volume stored locally by the application is greater than or equal to the preset data volume.

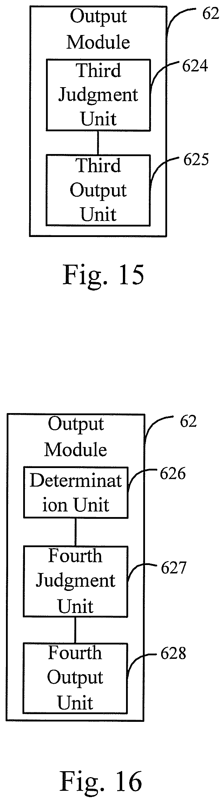

In an embodiment of the present invention, as shown in Fig. 15, the output module 62 includes a third judgment unit 624 or a third output unit 625.

The third judgment unit 624 is configured to judge whether the use situation parameter is greater than or equal to the corresponding preset threshold, and judge whether the data volume stored locally by the application is greater than or equal to the preset data volume.

The third output unit 625 is configured to output removal prompting information including preset highlighted prompting contents when the third judgment unit 624 judges that the use situation parameter is greater than or equal to the corresponding preset threshold, and the data volume stored locally by the application is greater than or equal to the preset data volume.

In an embodiment of the present invention, as shown in Fig. 16, the output module 62 includes a determination unit 626, a fourth judgment unit 627 and a fourth output unit 628.

The determination unit 626 is configured to determine a significance rank of the application in all applications according to the historical use information.

The fourth judgment unit 627 is configured to judge whether the significance rank of the application in all applications determined by the determination unit 626 is higher than or equal to a preset rank.

The fourth output unit 628 is configured to output removal prompting information including preset highlighted prompting contents when the fourth judgment unit 627 judges that the significance rank of the application in all applications is higher than or equal to the preset rank.

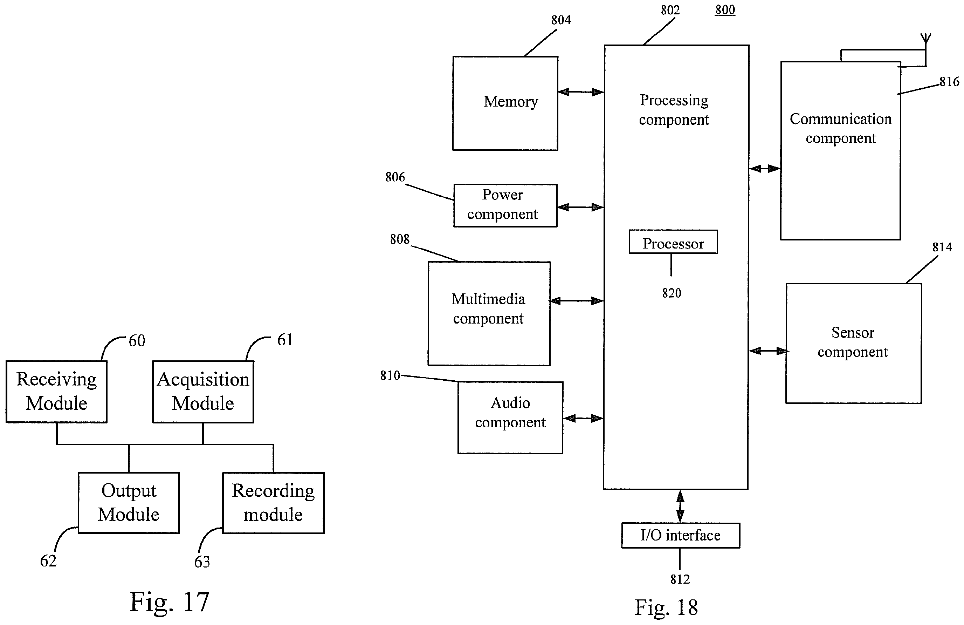

In an embodiment of the present invention, as shown in Fig. 17, the device for prompting application removal further includes a recording module 63.

The recording module 63 is configured to record the historical use information of the application acquired by the acquisition module 61.

With respect to the devices in the above embodiments, the specific manners for performing operations for individual modules therein have been described in detail in the embodiments regarding the methods, which will not be elaborated herein.

Fig. 18 is a block diagram showing a device 800 for prompting application removal, according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 18, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for prompting application removal.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for prompting application removal comprising:
receiving (S101) an instruction for removing an application;
acquiring (S102) historical use information of the application according to the instruction for removing the application; and
outputting (S103) corresponding removal prompting information according to the historical use information,
**characterized in that**, outputting the corresponding removal prompting information according to the historical use information comprises:
determining (S503a) a significance rank of the application in all applications according to the historical use information;
judging (S503b) whether the significance rank of the application in all applications is higher than or equal to a preset rank; and
if the significance rank of the application in all applications is higher than or equal to the preset rank, outputting (S503c) removal prompting information comprising preset highlighted prompting contents,
wherein the historical use information comprises: a use situation parameter of the application, and a data volume stored locally by the application; and wherein the use situation parameter comprises any one or more of a use frequency, a number of use, and a duration of use,
and wherein the significance rank of each application in all applications is obtained through a weighted calculation to the rank of each use situation parameter and the rank of the data volume stored locally.

2. The method of claim 1, **characterized in that**, when the historical use information comprises the use situation parameter of the application, outputting the corresponding removal prompting information according to the historical use information comprises:
judging (S203a) whether the use situation parameter is greater than or equal to a corresponding preset threshold; and
if the use situation parameter is greater than or equal to the corresponding preset threshold, outputting (S203b) removal prompting information comprising preset highlighted prompting contents.

3. The method of claim 1, **characterized in that**, when the historical use information comprises the data volume stored locally by the application, outputting the corresponding removal prompting information according to the historical use information comprises:
judging (S303a) whether the data volume stored locally by the application is greater than or equal to a preset data volume; and
if the data volume stored locally by the application is greater than or equal to the preset data volume, outputting (S303b) removal prompting information comprising preset highlighted prompting contents.

4. The method of claim 1, **characterized in that**, when the historical use information comprises the use situation parameter of the application and the data volume stored locally by the application, outputting the corresponding removal prompting information according to the historical use information comprises:
judging (S403b) whether the use situation parameter is greater than or equal to a corresponding preset threshold, and judging whether the data volume stored locally by the application is greater than or equal to a preset data volume; and
if the use situation parameter is greater than or equal to the corresponding preset threshold, and the data volume stored locally by the application is greater than or equal to the preset data volume, outputting (S403b) removal prompting information comprising preset highlighted prompting contents.

5. The method of any one of claims 2 to 4, **characterized in that**, outputting the removal prompting information comprising preset highlighted prompting contents comprises one or more of the following:
outputting the removal prompting information comprising preset highlighted prompting contents twice continuously; and
prompting the preset highlighted prompting contents in the removal prompting information by using words and/or voices.

6. The method of claim 5, **characterized in that**, the preset highlighted prompting contents comprise the historical use information.

7. The method of claim 1, **characterized in that**, the method, before receiving the instruction for removing the application, further comprises:
recording the historical use information of the application.

8. A device for prompting application removal comprising:
a receiving module (60) configured to receive an instruction for removing an application;
an acquisition module (61) configured to acquire historical use information of the application according to the instruction for removing the application received by the receiving module; and
an output module (62) configured to output corresponding removal prompting information according to the historical use information acquired by the acquisition module,
**characterized in that** the output module includes:
a determination unit configured to determine a significance rank of the application in all applications according to the historical use information;
a fourth judgment unit configured to judge whether the significance rank of the application in all applications determined by the determination unit is higher than or equal to a preset rank; and
a fourth output unit configured to output removal prompting information including preset highlighted prompting contents when the fourth judgment unit judges that the significance rank of the application in all applications is higher than or equal to the preset rank,
wherein the historical use information comprises: a use situation parameter of the application, and a data volume stored locally by the application; and wherein the use situation parameter comprises any one or more of a use frequency, a number of use, and a duration of use,
and wherein the significance rank of each application in all applications is obtained through a weighted calculation to the rank of each use situation parameter and the rank of the data volume stored locally.

9. The device of claim 8, **characterized in that**, the output module comprises:
a first judgment unit (620) configured to judge whether a use situation parameter is greater than or equal to a corresponding preset threshold; and
a first output unit (621) configured to output removal prompting information comprising preset highlighted prompting contents if the first judgment unit judges that the use situation parameter is greater than or equal to the corresponding preset threshold.

10. The device of claim 8, **characterized in that**, the output module comprises:
a second judgment unit (622) configured to judge whether a data volume stored locally by the application is greater than or equal to a preset data volume; and
a second output unit (623) configured to output removal prompting information comprising preset highlighted prompting contents if the second judgment unit judges that the data volume stored locally by the application is greater than or equal to the preset data volume.

11. The device of claim 8, **characterized in that**, the output module comprises:
a third judgment unit (624) configured to judge whether a use situation parameter is greater than or equal to a corresponding preset threshold, and judge whether a data volume stored locally by the application is greater than or equal to a preset data volume; and
a third output unit (625) configured to output removal prompting information comprising preset highlighted prompting contents if the third judgment unit judges that the use situation parameter is greater than or equal to the corresponding preset threshold, and the data volume stored locally by the application is greater than or equal to the preset data volume.

12. A device for prompting application removal, **characterized in that**, the device comprises:
a processor (820); and
a memory (804) for storing instructions executable by the processor;
wherein the processor is configured to:
receive an instruction for removing an application;
acquire historical use information of the application according to the instruction for removing the application; and
output corresponding removal prompting information according to the historical use information,
**characterized in that**, outputting the corresponding removal prompting information according to the historical use information comprises:
determining (S503a) a significance rank of the application in all applications according to the historical use information;
judging (S503b) whether the significance rank of the application in all applications is higher than or equal to a preset rank; and
if the significance rank of the application in all applications is higher than or equal to the preset rank, outputting (S503c) removal prompting information comprising preset highlighted prompting contents,
wherein the historical use information comprises: a use situation parameter of the application, and a data volume stored locally by the application; and wherein the use situation parameter comprises any one or more of a use frequency, a number of use, and a duration of use,
and wherein the significance rank of each application in all applications is obtained through a weighted calculation to the rank of each use situation parameter and the rank of the data volume stored locally.

13. A computer program, which when executing on a processor of a terminal, performs a method according to any one of claims 1 to 7.

## Patentansprüche

1. Verfahren zur Aufforderung zur Entfernung einer Anwendung, umfassend:
Empfangen (S101) einer Anweisung zum Entfernen einer Anwendung,
Erfassen (S102) historischer Nutzungsinformationen der Anwendung entsprechend der Anweisung zum Entfernen der Anwendung und
Ausgeben (S103) entsprechender Entfernungsaufforderungsinformationen zum en entsprechend den historischen Nutzungsinformationen,
**dadurch gekennzeichnet, dass** das Ausgeben der entsprechenden Entfernungsaufforderungsinformationen entsprechend den historischen Nutzungsinformationen umfasst:
Bestimmen (S503a) eines Bedeutungsrangs der Anwendung in allen Anwendungen entsprechend den historischen Nutzungsinformationen,
Beurteilen (S503b), ob der Bedeutungsrang des Antrags in allen Anträgen höher als oder gleich einem vorgegebenen Rang ist, und
wenn der Bedeutungsrang der Anwendung in allen Anwendungen höher als oder gleich dem voreingestellten Rang ist, Ausgeben (S503c) von Entfernungsaufforderungsinformationen, die voreingestellte hervorgehobene Aufforderungsinhalte umfassen,
wobei die historischen Nutzungsinformationen umfassen: einen Nutzungssituationsparameter der Anwendung und ein von der Anwendung lokal gespeichertes Datenvolumen, wobei der Nutzungssituationsparameter eines oder mehrere umfasst von: einer Nutzungshäufigkeit, einer Anzahl von Nutzungen und einer Nutzungsdauer, und
wobei der Bedeutungsrang jeder Anwendung in allen Anwendungen durch eine gewichtete Berechnung des Rangs jedes Nutzungssituationsparameters und des Rangs des lokal gespeicherten Datenvolumens erhalten wird.

2. Verfahren nach Anspruch 1, **dadurch gekennzeichnet, dass**, wenn die historischen Nutzungsinformationen den Nutzungssituationsparameter der Anwendung umfassen, das Ausgeben der entsprechenden Entfernungsaufforderungsinformationen entsprechend den historischen Nutzungsinformationen umfasst:
Beurteilen (S203a), ob der Nutzungssituationsparameter größer oder gleich einem entsprechenden voreingestellten Schwellenwert ist, und
wenn der Nutzungssituationsparameter größer oder gleich dem entsprechenden voreingestellten Schwellenwert ist, Ausgeben (S203b) von Entfernungsaufforderungsinformationen, die voreingestellte hervorgehobene Aufforderungsinhalte umfassen.

3. Verfahren nach Anspruch 1, **dadurch gekennzeichnet, dass**, wenn die historischen Nutzungsinformationen das von der Anwendung lokal gespeicherte Datenvolumen umfassen, das Ausgeben der entsprechenden Entfernungsaufforderungsinformationen entsprechend den historischen Nutzungsinformationen umfasst:
Beurteilen (S303a), ob das von der Anwendung lokal gespeicherte Datenvolumen größer oder gleich einem voreingestellten Datenvolumen ist, und
wenn das von der Anwendung lokal gespeicherte Datenvolumen größer oder gleich dem voreingestellten Datenvolumen ist, Ausgeben (S303b) von Entfernungsaufforderungsinformationen, die voreingestellte hervorgehobene Aufforderungsinhalte umfassen.

4. Verfahren nach Anspruch 1, **dadurch gekennzeichnet, dass**, wenn die historischen Nutzungsinformationen den Nutzungssituationsparameter der Anwendung und das von der Anwendung lokal gespeicherte Datenvolumen umfassen, das Ausgeben der entsprechenden Entfernungsaufforderungsinformationen entsprechend der historischen Nutzungsinformationen umfasst:
Beurteilen (S403b), ob der Nutzungssituationsparameter größer oder gleich einem entsprechenden voreingestellten Schwellenwert ist, und Beurteilen, ob das von der Anwendung lokal gespeicherte Datenvolumen größer oder gleich einem voreingestellten Datenvolumen ist, und
wenn der Nutzungssituationsparameter größer oder gleich dem entsprechenden voreingestellten Schwellenwert ist und das von der Anwendung lokal gespeicherte Datenvolumen größer oder gleich dem voreingestellten Datenvolumen ist, Ausgeben (S403b) von Entfernungsaufforderungsinformationen, die voreingestellte hervorgehobene Aufforderungsinhalte umfassen.

5. Verfahren nach einem der Ansprüche 2 bis 4, **dadurch gekennzeichnet, dass** das Ausgeben der Entfernungsaufforderungsinformationen, die voreingestellte hervorgehobene Aufforderungsinhalte umfassen, eines oder mehrere von Folgenden umfasst:
Ausgeben der Entfernungsaufforderungsinformationen, die voreingestellte hervorgehobene Aufforderungsinhalte umfassen, zweimal kontinuierlich, und
Auffordern der voreingestellten hervorgehobenen Aufforderungsinhalte in den Entfernungsaufforderungsinformationen mit Hilfe von Worten und/oder Stimmen.

6. Verfahren nach Anspruch 5, **dadurch gekennzeichnet, dass** die voreingestellten hervorgehobenen Aufforderungsinhalte die historischen Nutzungsinformationen umfassen.

7. Verfahren nach Anspruch 1, **dadurch gekennzeichnet, dass** das Verfahren vor dem Erhalt der Anweisung zum Entfernen der Anwendung ferner umfasst:
Aufzeichnen der historischen Nutzungsdaten der Anwendung.

8. Vorrichtung zur Aufforderung zur Entfernung der Anwendung, umfassend:
ein Empfangsmodul (60), das dazu konfiguriert ist, eine Anweisung zum Entfernen einer Anwendung zu empfangen,
ein Erfassungsmodul (61), das dazu konfiguriert ist, historische Nutzungsinformationen der Anwendung entsprechend der vom Empfangsmodul empfangenen Anweisung zum Entfernen der Anwendung zu erfassen, und
ein Ausgabemodul (62), das dazu konfiguriert ist, entsprechende Entfernungsaufforderungsinformationen entsprechend den von dem Erfassungsmodul erfassten historischen Nutzungsinformationen auszugeben,
**dadurch gekennzeichnet, dass** das Ausgabemodul umfasst:
eine Bestimmungseinheit, die dazu konfiguriert ist, einen Bedeutungsrang der Anwendung in allen Anwendungen entsprechend den historischen Nutzungsinformationen zu bestimmen,
eine vierte Beurteilungseinheit, die dazu konfiguriert ist, zu beurteilen, ob der Bedeutungsrang der Anwendung in allen Anwendungen, die von der Bestimmungseinheit bestimmt wurden, höher oder gleich einem voreingestellten Rang ist, und
eine vierte Ausgabeeinheit, die dazu konfiguriert ist, Entfernungsaufforderungsinformationen einschließlich voreingestellter hervorgehobener Aufforderungsinhalte auszugeben, wenn die vierte Beurteilungseinheit beurteilt, dass der Bedeutungsrang der Anwendung in allen Anwendungen höher oder gleich dem voreingestellten Rang ist,
wobei die historischen Nutzungsinformationen umfassen: einen Nutzungssituationsparameter der Anwendung und ein von der Anwendung lokal gespeichertes Datenvolumen, wobei der Nutzungssituationsparameter eines oder mehrere umfasst von: einer Nutzungshäufigkeit, einer Anzahl von Nutzungen und einer Nutzungsdauer,
und wobei der Bedeutungsrang jeder Anwendung in allen Anwendungen durch eine gewichtete Berechnung des Rangs jedes Nutzungssituationsparameters und des Rangs des lokal gespeicherten Datenvolumens erhalten wird.

9. Vorrichtung nach Anspruch 8, **dadurch gekennzeichnet, dass** das Ausgabemodul umfasst:
eine erste Beurteilungseinheit (620), die dazu konfiguriert ist, zu beurteilen, ob ein Nutzungssituationsparameter größer als oder gleich einem entsprechenden voreingestellten Schwellenwert ist, und
eine erste Ausgabeeinheit (621), die dazu konfiguriert ist, Entfernungsaufforderungsinformationen auszugeben, die voreingestellte hervorgehobene Aufforderungsinhalte umfassen, wenn die erste Beurteilungseinheit feststellt, dass der Nutzungssituationsparameter größer als oder gleich dem entsprechenden voreingestellten Schwellenwert ist.

10. Vorrichtung nach Anspruch 8, **dadurch gekennzeichnet, dass** das Ausgabemodul umfasst:
eine zweite Beurteilungseinheit (622), die dazu konfiguriert ist, zu beurteilen, ob ein von der Anwendung lokal gespeichertes Datenvolumen größer oder gleich einem voreingestellten Datenvolumen ist, und
eine zweite Ausgabeeinheit (623), die dazu konfiguriert ist, Entfernungsaufforderungsinformationen auszugeben, die voreingestellte hervorgehobene Aufforderungsinhalte umfassen, wenn die zweite Beurteilungseinheit beurteilt, dass das von der Anwendung lokal gespeicherte Datenvolumen größer als oder gleich dem voreingestellten Datenvolumen ist.

11. Vorrichtung nach Anspruch 8, **dadurch gekennzeichnet, dass** das Ausgabemodul umfasst:
eine dritte Beurteilungseinheit (624), die dazu konfiguriert ist, zu beurteilen, ob ein Nutzungssituationsparameter größer oder gleich einem entsprechenden voreingestellten Schwellenwert ist, und zu beurteilen, ob ein von der Anwendung lokal gespeichertes Datenvolumen größer oder gleich einem voreingestellten Datenvolumen ist, und
eine dritte Ausgabeeinheit (625), die dazu konfiguriert ist, Entfernungsaufforderungsinformationen auszugeben, die voreingestellte hervorgehobene Aufforderungsinhalte umfassen, wenn die dritte Beurteilungseinheit beurteilt, dass der Nutzungssituationsparameter größer oder gleich dem entsprechenden voreingestellten Schwellenwert ist, und das von der Anwendung lokal gespeicherte Datenvolumen größer oder gleich dem voreingestellten Datenvolumen ist.

12. Vorrichtung zur Aufforderung zur Entfernung einer Anwendung, **dadurch gekennzeichnet, dass** die Vorrichtung umfasst:
einen Prozessor (820) und
einen Speicher (804) zum Speichern von Befehlen, die von dem Prozessor ausgeführt werden können,
wobei der Prozessor dazu konfiguriert ist:
eine Anweisung zum Entfernen einer Anwendung zu erhalten,
historische Nutzungsinformationen der Anwendung entsprechend der Anweisung zum Entfernen der Anwendung zu erfassen und
entsprechende Entfernungsaufforderungsinformationen entsprechend den historischen Nutzungsinformationen auszugeben,
**dadurch gekennzeichnet, dass** das Ausgeben der entsprechenden Entfernungsaufforderungsinformationen entsprechend den historischen Nutzungsinformationen umfasst:
Bestimmen (S503a) eines Bedeutungsrangs der Anwendung in allen Anwendungen entsprechend den historischen Nutzungsinformationen,
Beurteilen (S503b), ob der Bedeutungsrang der Anwendung in allen Anträgen höher als oder gleich einem vorgegebenen Rang ist, und
wenn der Bedeutungsrang der Anwendung in allen Anwendungen höher als oder gleich dem voreingestellten Rang ist, Ausgeben (S503c) von Entfernungsaufforderungsinformationen, die voreingestellte hervorgehobene Aufforderungsinhalte umfassen,
wobei die historischen Nutzungsinformationen umfassen: einen Nutzungssituationsparameter der Anwendung und ein von der Anwendung lokal gespeichertes Datenvolumen, wobei der Nutzungssituationsparameter eines oder mehrere umfasst von: einer Nutzungshäufigkeit, einer Anzahl von Nutzungen und einer Nutzungsdauer,
und wobei der Bedeutungsrang jeder Anwendung in allen Anwendungen durch eine gewichtete Berechnung des Rangs jedes Nutzungssituationsparameter und des Rangs des lokal gespeicherten Datenvolumens erhalten wird.

13. Computerprogramm, das, wenn es auf einem Prozessor eines Endgeräts ausgeführt wird, ein Verfahren nach einem der Ansprüche 1 bis 7 durchführt.

## Revendications

1. Procédé d'invite de suppression d'application comprenant les étapes suivantes :
recevoir (S101) une instruction pour supprimer une application ;
acquérir (S102) des informations d'utilisation historiques de l'application selon l'instruction pour supprimer l'application ; et
délivrer en sortie (S103) des informations d'invite de suppression correspondantes selon les informations d'utilisation historiques,
**caractérisé en ce que** la sortie d'informations d'invite de suppression correspondantes selon les informations d'utilisation historiques comprend les étapes suivantes :
déterminer (S503a) un rang d'importance de l'application parmi toutes les applications selon les informations d'utilisation historiques ;
juger (S503b) si le rang d'importance de l'application parmi toutes les applications est supérieur ou égal à un rang prédéfini ; et
si le rang d'importance de l'application parmi toutes les applications est supérieur ou égal au rang prédéfini, délivrer en sortie (S503c) des informations d'invite de suppression comprenant un contenu d'invite prédéfini mis en évidence,
dans lequel les informations d'utilisation historiques comprennent : un paramètre de situation d'utilisation de l'application et un volume de données stockées localement par l'application ; et dans lequel le paramètre de situation d'utilisation comprend un quelconque ou plusieurs parmi une fréquence d'utilisation, un nombre d'utilisations, et une durée d'utilisation,
et dans lequel le rang d'importance de chaque application parmi toutes les applications est obtenu par un calcul pondéré du rang de chaque paramètre de situation d'utilisation et du rang du volume de données stockées localement.

2. Procédé de la revendication 1, **caractérisé en ce que**, lorsque les informations d'utilisation historiques comprennent le paramètre de situation d'utilisation de l'application, la sortie des informations d'invite de suppression correspondantes selon les informations d'utilisation historiques comprend les étapes suivantes :
juger (S203a) si le paramètre de situation d'utilisation est supérieur ou égal à un seuil prédéfini correspondant ; et
si le paramètre de situation d'utilisation est supérieur ou égal au seuil prédéfini correspondant, délivrer en sortie (S203b) des informations d'invite de suppression comprenant un contenu d'invite prédéfini mis en évidence.

3. Procédé de la revendication 1, **caractérisé en ce que**, lorsque les informations d'utilisation historiques comprennent le volume de données stockées localement par l'application, la sortie des informations d'invite de suppression correspondantes selon les informations d'utilisation historiques comprend les étapes suivantes :
juger (S303a) si le volume de données stockées localement par l'application est supérieur ou égal à un volume de données prédéfini ; et
si le volume de données stockées localement par l'application est supérieur ou égal au volume de données prédéfini, délivrer en sortie (S303b) des informations d'invite de suppression comprenant un contenu d'invite prédéfini mis en évidence.

4. Procédé de la revendication 1, **caractérisé en ce que**, lorsque les informations d'utilisation historiques comprennent le paramètre de situation d'utilisation de l'application et le volume de données stockées localement par l'application, la sortie des informations d'invite de suppression correspondantes selon les informations d'utilisation historiques comprend les étapes suivantes :
juger (S403b) si le paramètre de situation d'utilisation est supérieur ou égal à un seuil prédéfini correspondant, et juger si le volume de données stockées localement par l'application est supérieur ou égal à un volume de données prédéfini ; et
si le paramètre de situation d'utilisation est supérieur ou égal au seuil prédéfini correspondant, et si le volume de données stockées localement par l'application est supérieur ou égal au volume de données prédéfini, délivrer en sortie (S403b) des informations d'invite de suppression comprenant un contenu d'invite prédéfini mis en évidence.

5. Procédé de l'une quelconque des revendications 2 à 4, **caractérisé en ce que** la sortie des informations d'invite de suppression comprenant un contenu d'invite prédéfini mis en évidence comprend une ou plusieurs des étapes suivantes :
délivrer en sortie les informations d'invite de suppression comprenant un contenu d'invite prédéfini mis en évidence deux fois en continu ; et
inviter au contenu d'invite prédéfini mis en évidence dans les informations d'invite de suppression en utilisant des mots et/ou des voix.

6. Procédé de la revendication 5, **caractérisé en ce que** le contenu d'invite prédéfini mis en évidence comprend les informations d'utilisation historiques.

7. Procédé de la revendication 1, **caractérisé en ce que** le procédé, avant la réception de l'instruction pour supprimer l'application, comprend en outre :
l'enregistrement des informations d'utilisation historiques de l'application.

8. Dispositif d'invite de suppression d'application comprenant :
un module de réception (60) configuré pour recevoir une instruction pour supprimer une application ;
un module d'acquisition (61) configuré pour acquérir des informations d'utilisation historiques de l'application selon l'instruction pour supprimer l'application reçue par le module de réception ; et
un module de sortie (62) configuré pour délivrer en sortie des informations d'invite de suppression correspondantes selon les informations d'utilisation historiques acquises par le module d'acquisition,
**caractérisé en ce que** le module de sortie comporte :
une unité de détermination configurée pour déterminer un rang d'importance de l'application parmi toutes les applications selon les informations d'utilisation historiques ;
une quatrième unité de jugement configurée pour juger si le rang d'importance de l'application parmi toutes les applications déterminées par l'unité de détermination est supérieur ou égal à un rang prédéfini ; et
une quatrième unité de sortie configurée pour délivrer en sortie des informations d'invite de suppression comportant un contenu d'invite prédéfini mis en évidence lorsque la quatrième unité de jugement juge que le rang d'importance de l'application parmi toutes les applications est supérieur ou égal au rang prédéfini,
dans lequel les informations d'utilisation historiques comprennent : un paramètre de situation d'utilisation de l'application et un volume de données stockées localement par l'application ; et dans lequel le paramètre de situation d'utilisation comprend un quelconque ou plusieurs parmi une fréquence d'utilisation, un nombre d'utilisations, et une durée d'utilisation,
et dans lequel le rang d'importance de chaque application parmi toutes les applications est obtenu par un calcul pondéré du rang de chaque paramètre de situation d'utilisation et du rang du volume de données stockées localement.

9. Dispositif de la revendication 8, **caractérisé en ce que** le module de sortie comprend :
une première unité de jugement (620) configurée pour juger si un paramètre de situation d'utilisation est supérieur ou égal à un seuil prédéfini correspondant ; et
une première unité de sortie (621) configurée pour délivrer en sortie des informations d'invite de suppression comprenant un contenu d'invite prédéfini mis en évidence si la première unité de jugement juge que le paramètre de situation d'utilisation est supérieur ou égal au seuil prédéfini correspondant.

10. Dispositif de la revendication 8, **caractérisé en ce que** le module de sortie comprend :
une deuxième unité de jugement (622) configurée pour juger si un volume de données stockées localement par l'application est supérieur ou égal à un volume de données prédéfini ; et
une deuxième unité de sortie (623) configurée pour délivrer en sortie des informations d'invite de suppression comprenant un contenu d'invite prédéfini mis en évidence si la deuxième unité de jugement juge que le volume de données stockées localement par l'application est supérieur ou égal au volume de données prédéfini.

11. Dispositif de la revendication 8, **caractérisé en ce que** le module de sortie comprend :
une troisième unité de jugement (624) configurée pour juger si un paramètre de situation d'utilisation est supérieur ou égal à un seuil prédéfini correspondant, et juger si un volume de données stockées localement par l'application est supérieur ou égal à un volume de données prédéfini ; et
une troisième unité de sortie (625) configurée pour délivrer en sortie des informations d'invite de suppression comprenant un contenu d'invite prédéfini mis en évidence si la troisième unité de jugement juge que le paramètre de situation d'utilisation est supérieur ou égal au seuil prédéfini correspondant et que le volume de données stockées localement par l'application est supérieur ou égal au volume de données prédéfini.

12. Dispositif d'invite de suppression d'application, **caractérisé en ce que** le dispositif comprend :
un processeur (820) ; et
une mémoire (804) pour stocker des instructions exécutables par le processeur ;
dans lequel le processeur est configurée pour :
recevoir une instruction pour supprimer une application ;
acquérir des informations d'utilisation historiques de l'application selon l'instruction pour supprimer l'application ; et
délivrer en sortie des informations d'invite de suppression correspondantes selon les informations d'utilisation historiques,
**caractérisé en ce que** la sortie d'informations d'invite de suppression correspondantes selon les informations d'utilisation historiques comprend les étapes suivantes :
déterminer (S503a) un rang d'importance de l'application parmi toutes les applications selon les informations d'utilisation historiques ;
juger (S503b) si le rang d'importance de l'application parmi toutes les applications est supérieur ou égal à un rang prédéfini ; et
si le rang d'importance de l'application parmi toutes les applications est supérieur ou égal au rang prédéfini, délivrer en sortie (S503c) des informations d'invite de suppression comprenant un contenu d'invite prédéfini mis en évidence,
dans lequel les informations d'utilisation historiques comprennent : un paramètre de situation d'utilisation de l'application et un volume de données stockées localement par l'application ; et dans lequel le paramètre de situation d'utilisation comprend un quelconque ou plusieurs parmi une fréquence d'utilisation, un nombre d'utilisations, et une durée d'utilisation,
et dans lequel le rang d'importance de chaque application parmi toutes les applications est obtenu par un calcul pondéré du rang de chaque paramètre de situation d'utilisation et du rang du volume de données stockées localement.

13. Programme informatique qui, lorsqu'il est exécuté sur un processeur d'un terminal, réalise un procédé selon l'une quelconque des revendications 1 à 7.
